# EUROPEAN PATENT APPLICATION

(11) **EP 4 365 209 A1**
(43) Date of publication of application: **08.05.2024**
(21) Application number: 22204853.0
(22) Date of filing: 01.11.2022
(51) Int. Cl.: C08F 2/01, B01J 3/02, B01J 3/04, C08F 10/00

(54) **HIGH-PRESSURE POLYMERIZATION PROCESS OF ETHYLENICALLY UNSATURATED MONOMERS**

(71) Applicant: Basell Polyolefine GmbH, 50389 Wesseling (DE)
(72) Inventor: KHAYRULLIN, Danir, 50321 Bruehl (DE); MOHRBUTTER, Juergen, 53347 Alfter (DE); WOLF, Christoph, 50259 Pulheim-Dansweiler (DE); FINETTE, Andre-Armand, 50997 Köln (DE); DEUERLING, Michael, 53919 Weilerswist (DE); WOLFRAM, Sven, 53881 Euskirchen (DE)
(74) Representative: LyondellBasell

(57) **Abstract**

A process for the preparation of ethylene polymer or ethylene copolymers in a high-pressure polymerization apparatus wherein one or more free-radical polymerization initiators are introduced into the high-pressure polymerization apparatus by use of a phased flow pump as well as a high-pressure polymerization apparatus for carrying out said process.

## Description

### FIELD OF DISCLOSURE

The present disclosure refers to a process for the preparation of ethylene polymer or ethylene copolymers in a high-pressure polymerization apparatus wherein one or more free-radical polymerization initiators are introduced into the high-pressure polymerization apparatus by use of a flow pump as well as a high-pressure polymerization apparatus for carrying out said process.

### BACKGROUND OF THE DISCLOSURE

Polyethylene was first discovered at the end of the 19^{th} century and remains the most commonly produced polymer, with applications ranging from packaging to electrical insulation.

Polyethylene may be produced by a number of different processes with polymerization in the presence of free-radical initiators at elevated pressures being the most valued process with high commercial relevance, especially for the preparation of low-density polyethylene (LDPE).

A common set-up for the production of polyethylene usually comprises a high-pressure polymerization reactor such as an autoclave or tubular reactor. The reaction components are usually compressed using a set of two compressors, a primary and a secondary compressor. The compressed reaction gas may be pre-heated before entering the high-pressure reactor where polymerization takes place. At the end of the polymerization sequence, the obtained polymer is then conveyed to a separator and passed on to an extruder or granulator of pelletizing the polymer. In addition, the set-up usually includes means for feeding monomers, comonomers, free-radical initiators and other substances at one or more positions to the polymerization reaction.

In particular in high-pressure processes, the carefully controlled injection of the reaction components into the process stream is often key to obtaining consistent, high quality products. Typically, initiators must be injected at precise volumetric or mass flow rates into relatively much larger flows or raw and intermediate products. In addition to promoting the desired chemical reaction, the initiators often affect important process parameters such as pressure and temperature in process machinery and reaction vessels.

US 6,135,724 provides a metering pump system comprising: a source of pressurized drive fluid; a plurality of metering pumps including respective drive sections and metering sections, the drive sections being coupled to the source of pressurized fluid, each metering pump including a stationary portion and a movable portion, the movable portion being displaceable with respect to the stationary portion under the influence of the drive fluid to displace a metered fluid from the respective metering section; a plurality of velocity sensor circuits, a velocity sensor circuit being coupled to each metering pump, each velocity sensor circuit generating velocity signals representative of velocity of the movable portion with respect to the stationary portion of a respective metering pump; and a control circuit coupled to the sensor circuits for regulating application of drive fluid from the source to each metering pump drive section based upon the velocity signals.

US 2,819835 discloses a fluid pressure system for delivering a continuous and steady flow of compressible fluid at a predetermined high delivery pressure which comprises, in combination, means for supplying said compressible fluid, a plurality of high pressure cylinders with high pressure chambers and pistons having high pressure faces, a delivery manifold, conduits connecting each of said cylinders with the means for supplying compressible fluid, conduits connecting each of said cylinders with the delivery manifold in parallel relation, means for imparting reciprocating delivery and return strokes to said pistons including means operable during at least the latter portion of the delivery stroke of each high pressure piston face to move said piston with a delivery pressure producing force, and means for producing in each said cylinder chamber a charge of said compressible fluid compressed to a charge pressure in the order of 1-10% less than the delivery pressure, and means for controlling the reciprocation of each of said pistons to effect said delivery strokes at delivery pressure in a continuous sequence.

While the state of the art provides some means for addressing the problem of injection of reaction components into a high-pressure process gas stream, there is still the need for improved high-pressure polymerization processes which in particular allow for an uninterrupted flow of the process gas and steady operation of the reactor.

### SUMMARY OF THE DISCLOSURE

The present disclosure provides a process for the preparation of ethylene polymers or ethylene copolymers in a high-pressure polymerization apparatus comprising a polymerization reactor, the polymerization reactor being a continuously operated autoclave reactor with a stirrer driven by an electrical motor or a continuously operated tubular reactor, the process comprising the steps of:
- compressing a reaction mixture comprising ethylene or ethylene and one or more comonomers to a pressure of 110 MPa to 500 MPa in one or more compressors to obtain compressed process gas;
- feeding the compressed process gas into the polymerization reactor;
- within the polymerization reactor, polymerizing the ethylene or ethylene and one or more comonomers in the presence of one or more free-radical polymerization initiators at temperatures from 100 to 350 °C;
wherein the one or more free-radical polymerization initiators are introduced into the polymerization reactor by use of a phased flow pump, the phased flow pump being a reciprocating pump with at least two heads, each head comprising at least one cylinder.

In some embodiments, at least part of the process gas is pre-mixed with the one or more free-radical polymerization initiators prior to introduction into the polymerization reactor.

In some embodiments, the polymerization reactor has one or more reaction zones, preferably at least two reaction zones, more preferably up to 6 reaction zones and in particular 3 or 4 reaction zones.

In some embodiments, when the polymerization reactor is an autoclave reactor, the reaction zones may be defined by baffles attached to the stirrer.

In some embodiments, the pump is operated in a manner of overlapping strokes of cylinders of different pump heads.

In some embodiments, the cylinders of the pump heads are operated such that one cylinder starts moving forward and thus increases the pressure before the preceding cylinder has reached the end of its stroke and the pressure starts to decrease.

In some embodiments the cylinders operate in a suction stroke in which pressure inside the cylinder is reduced and/or initiator is sucked into the cylinder and in a discharge stroke, in which pressure inside the cylinder is increased and/or initiator is discharged out of the cylinder, wherein the suction stroke is shorter than the discharge stroke.

In some embodiments, the suction stroke of the cylinders of one pump head finishes before the discharge stroke of the cylinders of another pump head.

In some embodiments, the process further comprises discharging the reaction mixture comprising ethylene polymer and ethylene or ethylene copolymer, ethylene and one or more comonomers from the polymerization reactor.

In some embodiments, the process further comprises a step of cooling the discharged reaction mixture.

In some embodiments, the process further comprises transferring the discharged reaction mixture to at least one product separator for separating the ethylene polymer or ethylene copolymer.

In some embodiments, the process further comprises converting the obtained ethylene polymer or ethylene copolymer into pellets.

In some embodiments, the one or more comonomers are selected from the group consisting of α,β-unsaturated C₃-C₈-carboxylic acids, derivatives of α,β -unsaturated C₃-C₈-carboxylic acids, such as unsaturated C₃-C₈-carboxylic esters and anhydrides, and 1-olefins, in particular vinyl carboxylates such as vinyl acetate, propene, 1-butene, 1-hexane, acrylic acid, n-butyl acrylate, ter-butyl acrylate, 2-ethylhexyl acrylate and vinyl propriate.

In another aspect, the present disclosure provides a high-pressure polymerization apparatus for carrying out the process of any of the forgoing claims, the reactor comprising:
- a compressor or a series of compressors for compressing a reaction mixture comprising ethylene or ethylene and one or more comonomers to a pressure of 110 MPa to 500 MPa;
- a polymerization reactor for polymerizing ethylene or ethylene and one or more comonomers in the presence of one or more free-radical polymerization initiators at temperatures from 100 to 350 °C, the polymerization reactor being a continuously operated autoclave reactor with a stirrer driven by an electrical motor or a continuously operated tubular reactor;
- at least one feedline for feeding the compressed process gas into the polymerization reactor; and
- a reciprocating phased flow pump with at least two heads, each head comprising at least one cylinder, for introducing the one or more free-radical polymerization initiators into the polymerization reactor.

In some embodiments, the apparatus further comprises:
- a cooler for cooling a reaction mixture discharged from the autoclave reactor;
- at least one separator for separating the ethylene polymer or ethylene copolymer; and
- a pelletizer converting the ethylene polymer or ethylene copolymer into pellets.

### BRIEF DESCRIPTION OF THE DRAWINGS

Figure 1 shows schematically an exemplary mode of operation of the process of the present disclosure.
Figure 2 shows a schematic exemplary set-up of the polymerization apparatus of the present disclosure.

### DETAILED DESCRIPTION OF THE DISCLOSURE

It has been found that by conducting the polymerization in a high-pressure polymerization apparatus comprising a continuously operated autoclave reactor or a continuously operated tubular reactor and introducing the polymerization initiator into the reactor by use of a specific phased flow pump, a stable operation of the reactor as well as an uninterrupted flow of the initiator can be achieved. As used herein, reactor stability means that a stable operation is achieved without interruption of the reaction or having a stable temperature profile as well as no sudden thermal decomposition.

The present disclosure describes a process for the preparation of ethylene polymers or ethylene copolymers in a high-pressure polymerization apparatus comprising as the polymerization reactor a continuously operated autoclave reactor with a stirrer driven be an electrical motor or a continuously operated tubular reactor with the free-radical initiators being introduced by use of a reciprocating pump with at least two heads, each head comprising at least one cylinder.

Polymerization in the process according to the disclosure can be carried out in both, an autoclave reactor and a tubular reactor or even a combination of an autoclave reactor and a tubular reactor arranged in series, thus being adaptable to the commonly used types of reactors.

Within the process of the present disclosure, the process gas comprising ethylene or ethylene and one or more comonomers is compressed to a pressure of 110 MPa to 500 MPa to obtained compressed process gas. The compression of the process gas to the polymerization pressure is preferably carried out by one or more compressors in a sequence of compression stages, where preferably a primary compressor first compresses the process gas to a pressure of from 10 MPa to 50 MPa and a secondary compressor, which is sometimes designated as hyper compressor, further compresses the process gas to the polymerization pressure of from 110 MPa to 500 MPa.

Preferably the primary compressor and the secondary compressor are multistage compressors. It is further possible to separate one or more stages of one or both of these compressors and divide the stages into separated compressors. Furthermore, it is possible that in each stage at least one, preferably more than one cylinder is provided. For example, a hyper compressor having two stages and from 1 to 20, preferably from 4 to 12 cylinders in each stage may be provided. Preferably, the secondary compressor is a hyper compressor. However, usually a series of one primary compressor and one secondary compressor is used for compressing the process gas to the polymerization pressure. In such cases, sometimes the whole primary compressor is designated as primary compressor. However, it is also common to designate the one or more first stages of the primary compressor, which compress the recycle gas from the low-pressure product separator to the pressure of the fresh ethylene feed, as the booster compressor and then only the one or more subsequent stages as the primary compressor, although the booster compressor and the subsequent stages are all part of one apparatus. After each of the compression stages, the compressed gas mixture is cooled by a compression stage cooler to remove the heat of compression. The compression stage coolers may be operated in way that the temperature of the compressed gas mixtures is below 130°C.

After compression, the compressed process gas is introduced into the polymerization reactor. In case the process of the present disclosure is carried out in a continuously operated autoclave reactor, the compressed process gas may be fed into the autoclave reactor through one or more feeding lines equipped with flow control valves.

In general, the high-pressure polymerization is carried out at pressures of from 110 MPa to 500 MPa, with pressures of from 160 MPa to 350 MPa being more preferred and pressures of from 200 MPa to 330 MPa being particularly preferred for polymerization in a tubular reactor and with pressures of from 110 MPa to 300 MPa being more preferred and pressures of from 120 MPa to 280 MPa being particularly preferred for polymerization in an autoclave reactor. The polymerization temperatures are in the range of from 100°C to 350°C and preferably in the range of from 180°C to 350°C and particularly preferred from 200°C to 330°C for polymerization in a tubular reactor and more preferably in the range of from 110°C to 320°C for polymerization in an autoclave reactor.

Within the course of the present disclosure, polymerization of ethylene or ethylene and one or more copolymers is initiated by way of free-radical initiator.

Possible initiators for starting the polymerization are in general any substances that can produce radical species under the conditions in the polymerization reactor, for example, oxygen, air, azo compounds or peroxidic polymerization initiators.

Initiation using organic peroxides or azo compounds also represents a preferred embodiment of the present disclosure. Examples of organic peroxides for use in the present technology are peroxy esters, peroxy ketals, peroxy ketones and peroxycarbonates, e.g. di(2-ethylhexyl) peroxydicarbonate, dicyclohexyl per-oxydicarbonate, diacetyl peroxydicarbonate, tert-butyl peroxyisopropylcarbonate, di-sec-butyl peroxydicarbonate, di-tert-butyl peroxide, di-tert-amyl peroxide, dicumyl peroxide, 2,5-dimethyl-2,5-di-tert-butylperoxyhexane, tert-butyl cumyl peroxide, 2,5-dimethyl-2,5-di(tert-butylperoxy)hex-3-yne, 1,3-diisopropyl monohydroperoxide or tert-butyl hydroperoxide, didecanoyl peroxide, 2,5-dimethyl-2,5-di(2-ethylhexanoylperoxy)hexane, tert-amyl peroxy-2-ethylhexanoate, dibenzoyi peroxide, tert-butyl peroxy-2-ethylhexanoate, tert-butyl peroxydiethylacetate, tert-butyl peroxydi- ethylisobutyrate, tert-butyl peroxy-3,5,5-trimethylhexanoate, 1,1-di(tert-butylperoxy)-3,3,5-trimethylcyclohexane, 1,1-di(tert-butylperoxy)cyclohexane, tert-butyl peroxyacetate, cumyl peroxyneodecanoate, tert-amyl peroxyneodecanoate, tert-amyl peroxypivalate, tert-butyl peroxyneodecanoate, tert-butyl permaleate, tert-butyl peroxypivalate, tert-butyl peroxyisononanoate, diisopropylbenzene hydroperoxide, cumene hydroperoxide, tert-butyl peroxybenzoate, methyl isobutyl ketone hydroperoxide, 3,6,9-triethyl-3,6,9-trimethyl-triperoxocyclononane and 2,2-di(tert-butylperoxy)butane. Azoalkanes (diazenes), azodicarboxylic esters, azodicarboxylic dinitriles such as azobisisobutyronitnle and hydrocarbons which decompose into free radicals and are also referred as C-C initiators, e.g. 1,2-diphenyl-1,2-dimethylethane derivatives and 1,1,2,2-tetramethylethane derivatives, may also be used. It is possible to use either individual initiators or preferably mixtures of various initiators.

Preferred peroxidic polymerization initiators are 1,1-di(tert-butylperoxy)cyclohexane, 2,2-di(tert-butylperoxy)butane, tert-butyl peroxy-3,5,5-trimethylhexanoate, tert-butyl peroxybenzo- ate, 2,5-dimethyl-2,5-di(tert-butylperoxy)hexane, tert-butyl cumyl peroxide, di-tert-butyl peroxide and 2,5-dimethyl-2,5-di(tert-butylperoxy)hex-3-yne, and particular preference is given to using tert-butyl peroxy-3,5,5-trimethylhexanoate, di-(2-ethylhexyl)peroxydicarbonate or tert-butyl peroxy- 2-ethylhexanoate.

In some embodiments of the disclosure, the polymerization is carried out by using oxygen, either fed in the form of pure O₂ or as air. In case of initiating the polymerization with oxygen, the initiator may be first mixed with the ethylene feed and then fed to the reactor. In such a case it is not only possible to feed a stream comprising monomer and oxygen to the beginning of the polymerization reactor but also to one or more points along the reactor creating two or more reaction zones.

In case the process of the disclosure is carried out in an autoclave reactor, the free-radical initiator may also be introduced into different reaction zones created by baffles attached to the stirrer shaft of the motor in the autoclave reactor.

The initiators can be employed individually or as a mixture in concentrations of from 0.1 mol/t to 50 mol/t of polyethylene produced, in particular from 0.2 mol/t to 20 mol/t, in each reaction zone.

There is no limit for the number of different initiators to be used in the process of the present disclosure, however preferably the mixtures are composed of from two to six and in particular of two ,three or four different initiators. If a tubular reactor is used, the number of initiators in a mixture may be from two to six, in particular two, three or four. If an autoclave reactor is used, the initiator may be a single initiator or a mixture of up to six different initiators, in particular a mixture of two different initiators. In some embodiments of the present disclosure the free-radical polymerization initiator is a single initiator or a mixture of at least two different initiators. all zones can be fed with the same initiator/mixture of initiators or different initiators/mixture of initiators.

Particular preference is given to using mixtures of initiators which have different decomposition temperatures. It is often advantageous to use the initiators in the dissolved state. Examples of solvents for use in the present disclosure are ketones and aliphatic hydrocarbons, in particular octane, decane and isododecane and other saturated C₈-C₂₅-hydrocarbons.

In an embodiment, at least part of the process gas is pre-mixed with the one or more free-radical initiators prior to introduction into the polymerization reactor. By pre-mixing the process gas with the initiators, a more homogenous distribution of the initiator could be achieved which in turn led to a more stable operation of the reactor.

Polymerization within the course of the process of the present disclosure is initiated by one or more free-radical polymerization initiators which are introduced either directly into the polymerization reactor or to the process gas entering reactor by use of a reciprocating phased flow pump with at least two heads, each head comprising at least one cylinder. By using such a phased flow pump for the introduction of the initiators, surprisingly, a more stable and less interrupted flow of initiator could be realized which resulted in better process control, reactor stability and a high quality product. As used herein, reactor stability means that a stable operation is achieved without interruption of the reaction or having a stable temperature profile as well as no sudden thermal decomposition. It was further surprisingly found that combination of such a flow pump with a tubular reactor not only resulted in an improved initiator flow, but also resulted in a more stable reactor temperature profile allowing higher temperatures in the reactor and in turn higher production rates.

In order to ensure smooth operation of the reactor and a steady injection of the initiator, the phased flow pump is preferably operated in a manner of overlapping strokes of cylinders of different pump heads. In particular, the cylinders of the pump heads are operated such that one cylinder starts moving forward and increases the pressure in the respective pump head before the preceding cylinder has reached the end of its stroke and starts decreasing the pressure in the .

In one embodiment, the initiator flow may be controlled manually and may be adjusted according to a temperature measured inside the reactor. In some embodiments, the phased flow pump may be adapted to automatically adjust the initiator flow based on the data corresponding to the temperature measured inside the reactor.

According to one embodiment of the present disclosure, the process is carried out in a high-pressure polymerization reactor which preferably comprises a reactor-by-pass for directly transferring at least part of the compressed process gas from the secondary compressor to a high-pressure recycle system. It was surprisingly found that by transferring at least part of the compressed process gas from the compressor to a high-pressure recycle system, the residence time of the process gas in the reactor could be reduced. Further, due to the smaller amount of process gas passing through the reactor, less energy is required to bring the process gas up to process temperatures and the size of gas heating equipment and heating media can be reduced.

This set-up is especially preferred in case polymerization is carried out in a continuously operated autoclave reactor.

In some embodiments, the polymerization reactor has one or more reaction zones, preferably at least one or two reaction zones, more preferably up to 6 reaction zones and in particular 3 or 4 reaction zones. In case of an autoclave reactor, the number of reaction zones is preferably defined by the number of agitator baffles on the stirrer.

According to one embodiment of the present disclosure, the process is carried out in a continuously operated autoclave reactor equipped with a stirrer operated by an electrical motor. In that case, the process gas can be employed for additional use, e.g. for cooling the motor installed inside the autoclave reactor. Therefore, In some embodiments, at least part of the process gas is passed along the motor of the stirrer. This particular set-up has the additional advantage that no high-pressure seal is needed on the motor shaft to avoid process gas leaks . Preferred high-pressure autoclave reactors for carrying out the process of the present disclosure are stirred reactors and may have a length-to-diameter ratio in a range from 2 to 30, preferably from 2 to 20.

In some embodiments, the process of the present disclosure further comprises a step of discharging the reaction mixture comprising ethylene polymer and ethylene or ethylene copolymer, ethylene and one or more comonomers from the polymerization reactor. The reaction mixture may be discharged through a pressure reduction valve and any unreacted monomer re-introduced into the polymerization process. In a particular preferred embodiment, the process further includes a step of cooling the discharged reaction mixture.

In order to separate the desired polymer from the reaction mixture, the discharged reaction mixture is preferably transferred to at least one product separator for separating the ethylene polymer or ethylene copolymer. In some embodiments, separation is carried out in two or more steps. In a particular preferred embodiment, separation is carried out in two steps at different pressures, preferably in a high-pressure product separator and a low-pressure product separator. The gaseous components of the reaction mixture may be cooled and send to the compressor to ensure efficient gas circulation.

The high-pressure polymerization of the present disclosure is preferably a homopolymerization of ethylene or a copolymerization of ethylene with one or more other monomers, provided that these monomers are free-radically copolymerizable with ethylene under high pressure. Examples of copolymerizable monomers for use in the present technology are α,β-unsaturated C₃-C₈-carboxylic acids, in particular maleic acid, fumaric acid, itaconic acid, acrylic acid, methacrylic acid and crotonic acid, derivatives of α,β-unsaturated C₃-C₈-carboxylic acids, e.g. unsaturated C₃-C₁₅ -carboxylic esters, in particular esters of C₁-C₆-alkanols, or anhydrides, in particular methyl methacrylate, ethyl meth-acrylate, n-butyl methacrylate or tert-butyl methacrylate, methyl acrylate, ethyl acrylate, n-butyl acrylate, 2-ethylhexyl acrylate, tert-butyl acrylate, methacrylic anhydride, maleic anhydride or itaconic anhydride, and 1-olefins such as propene, 1-butene, 1-pentene, 1-hexene, 1-octene or 1-decene. In addition, vinyl carboxylates, particularly preferably vinyl acetate, can be used as comonomers. Propene, 1-butene, 1-hexene, acrylic acid, n-butyl acrylate, tert-butyl acrylate, 2-ethylhexyl acrylate, vinyl acetate or vinyl propionate are particularly suitable as comonomer. In particular, preference is given to comonomers selected from the group consisting of α,β-unsaturated C₃-C₈-carboxylic acids, derivatives of α,β -unsaturated C₃-C₈-carboxylic acids, such as unsaturated C₃-C₈-carboxylic esters and anhydrides, and 1-olefins, in particular vinyl carboxylates such as vinyl acetate, propene, 1-butene, 1-hexane, acrylic acid, n-butyl acrylate, ter-butyl acrylate, 2-ethylhexyl acrylate and vinyl propriate.

In the case of copolymerization, the proportion of comonomer or comonomers in the reaction mixture is from 1 to 50% by weight, preferably from 3 to 40% by weight, based on the amount of monomers, i.e. the sum of ethylene and other monomers.

In some embodiments, at least part of the process gas is cooled before entering the polymerization reactor. If an autoclave reactor is used, it is preferred that at least part of the process gas is heated up before entering the autoclave reactor during a start-up phase in which the polymerization reaction is being started. After the start-up phase, at least part of, in particular all of the process gas may be cooled before entering the autoclave reactor. If a tubular reactor is used, either none of the process gas may be cooled or only a part of the process gas is cooled before entering the polymerization reactor. The remaining part of the process gas, or all of the process gas, may be heated up before entering the tubular reactor. Preferably, cooling is affected by conveying the compressed process gas through at least one heat exchanger before introduction into the polymerization reactor.

Another aspect of the present disclosure is a high-pressure polymerization apparatus for carrying out the process of the present disclosure, the reactor comprising:
- a compressor or a series of compressors for compressing a reaction mixture comprising ethylene or ethylene and one or more comonomers to a pressure of 110 MPa to 500 MPa;
- a polymerization reactor for polymerizing ethylene or ethylene and one or more comonomers in the presence of one or more free-radical polymerization initiators at temperatures from 100 to 350 °C, the polymerization reactor being a continuously operated autoclave reactor with a stirrer driven by an electrical motor or a continuously operated tubular reactor;
- at least one feedline equipped for feeding the compressed process gas into the polymerization reactor; and
- a reciprocating flow pump with at least two heads, each head comprising at least one cylinder, for introducing the one or more free-radical polymerization initiators into the polymerization reactor.

In some embodiments, the apparatus further comprises
- a cooler for cooling a reaction mixture discharged from the polymerization reactor;
- at least one separator for separating the ethylene polymer or ethylene copolymer; and
- a pelletizer converting the ethylene polymer or ethylene copolymer into pellets.

The apparatus of the present disclosure may, in some embodiments, further comprise a reactor-by-pass for directly transferring compressed process gas from the compressor or series of compressors to a high-pressure recycle system.

In some embodiments, for the case the polymerization reactor is a continuously operated autoclave reactor, the feedlines are equipped with flow control valves.

The present disclosure will be explained in more detail with reference to the following figure which is by no means to be understood as limiting the scope or spirit of the present disclosure.

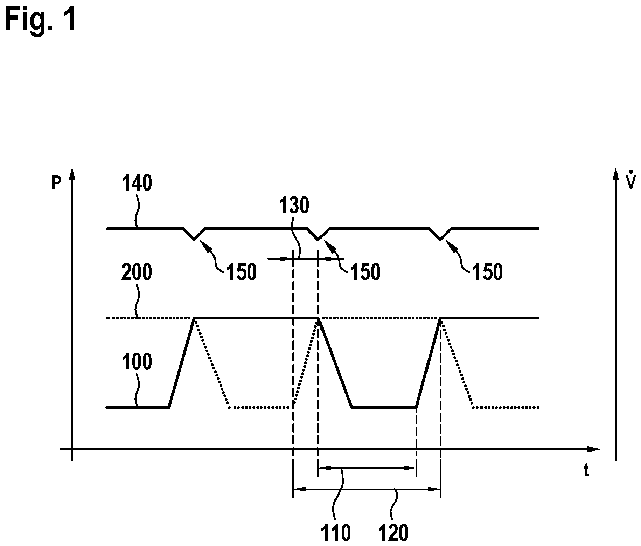

Figure 1 schematically shows a pressure/time diagram of the free-radical initiator feed introduced into the polymerization reactor. The free-radical initiator may be fed either directly into the polymerization reactor or be fed to the process gas stream. The diagram shows the pressure course over time of a first cylinder 100 of a first pump head (solid line) and the pressure course over time of a second cylinder 200 of a second pump head (dotted line). As can be seen, the phased flow pump used for introducing the initiator feed is cyclically operated. The cylinders comprise a plunger which moves in a suction stroke backwards increasing an inner volume of the cylinder and thus initially causing a drop of pressure and subsequently sucking initiator into the inner volume. In a discharge stroke, the plunger moves forward increasing the pressure inside the inner volume and subsequently pushing the initiator out of the inner volume.

With reference to the cylinder 100 represented by the solid line, the cyclic operation of the cylinders is discussed. Cylinder 100 operates at minimum pressure at a suction stroke. During suction of the initiator into the cylinder 100, the pressure in the first cylinder is low and stays essentially constant, shown by the initial horizontal course of the solid line, due to the cylinder being filled with initiator. Once the suction of initiator into the cylinder is completed, the pressure is increased by movement of a plunger of the cylinder forwards, to a predetermined pressure for injecting the initiator. Thus, the pressure course increases, in particular steadily, until the predetermined pressure is reached. At the predetermined pressure, the initiator is continuously discharged. During the discharge, the pressure is constant at the predetermined pressure level, shown by the horizontal section at higher pressure representing. Once the initiator is completely discharged, the plunger of the cylinder moves backwards leading to a steady decrease of pressure until the minimum pressure is reached starting the new cycle with the suction stroke as described above.

The second cylinder 200 is operated anticyclic to the first cylinder 100 shown with the dotted line. In order to further improve the steadiness of the initiator flow, it is particularly preferred to phase the strokes of the cylinders such that one cylinder reaches the predetermined pressure at the end of the discharge stroke of the other cylinder before starting to reduce the pressure. Consequently, the suction stroke 110 is shortened compared to the discharge stroke 120 by the phasing 130 schematically shown in Fig. 1. As shown with line 140 depicting the volume flow of the initiator over time, the volume flow remains essentially constant with minimal to no interruptions due to the overlap of strokes and the essentially constant discharge of initiator flows. At the transition between the cylinders responsible for the discharge, minor fluctuations in the flow are depicted by bumps 150.

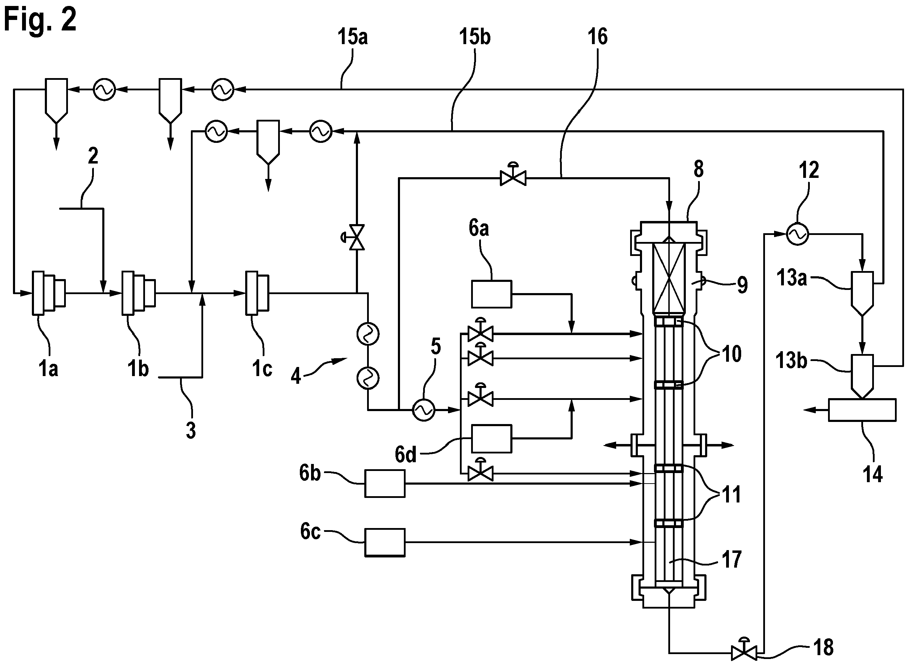

Figure 2 shows a schematic set-up of the polymerization apparatus of the present disclosure. Process gas comprising a mixture of ethylenically unsaturated monomer or a mixture of ethylenically unsaturated monomer and one or copolymers is compressed in a series of compressors with a booster compressor 1a, a primary compressor 1b and a hyper compressor 1c. Fresh ethylenically unsaturated monomer, chain transfer agents (CTA) and/or comonomer may be introduced via feed lines 2 and 3, respectively. The compressed process gas is conveyed to a cooler system 4, optionally pre-heated in a start-up heater 5 and introduced into the polymerization reactor 8 via feed lines 16. Part of the process gas is premixed with the polymerization initiator which is provided by pumps 6a to 6d. The polymerization reactor 8 in the exemplary set-up is in the form of a continuously operated autoclave reactor equipped with a motor 9 and baffle plates 11 which dived the reactor into different reaction zones. The reactor 8 further comprises mixing elements 10 installed on a stirrer shaft 17 for mixing the contents of the reactor 8.

The reaction mixture may leave the polymerization reactor 8 through pressure control valve 18 and passes a post reactor cooler 12. Thereafter, the resulting polymer is separated off from unreacted ethylene and other low molecular weight compounds (monomers, oligomers, polymers, additives, solvent etc.) by means of a first separation vessel 13a and a second separation vessel 28, discharged and pelletized via an extruder and granulator 14.

The ethylene and comonomers which have been separated off in the first separation vessel 13a are fed back to the reactor 8 via high-pressure circuit 15b. In the high-pressure circuit 15b, the gaseous material separated from the reaction mixture is first freed from other constituents in at least one purification stage and then added to the monomer stream between primary compressor 1b and hyper compressor 1c. The high-pressure circuit 15b may separate the solvent from waxes.

The ethylene which has been separated off in the second separation vessel 13b, which further comprises, inter alia, the major part of the very low molecular weight products of the polymerization (oligomers) and solvent, is worked up in a low-pressure circuit 15a comprising a plurality of separators with heat exchangers being arranged between each of the separators. Fig. 2 shows two purification stages consisting of heat exchangers and separators. It is however also possible to use only one purification stage or preferably more than two purification stages. The low-pressure circuit 15a usually separates oils, solvent and waxes. The worked up ethylene is first compressed in the booster compressor 1a and returned to the primary compressor 1b.

## Claims

1. Process for the preparation of ethylene polymers or ethylene copolymers in a high-pressure polymerization apparatus comprising a polymerization reactor, the polymerization reactor being a continuously operated autoclave reactor with a stirrer driven by an electrical motor or a continuously operated tubular reactor, the process comprising the steps of:
• compressing a reaction mixture comprising ethylene or ethylene and one or more comonomers to a pressure of 110 MPa to 500 MPa in one or more compressors to obtain compressed process gas;
• feeding the compressed process gas into the polymerization reactor
• within the polymerization reactor, polymerizing the ethylene or ethylene and one or more comonomers in the presence of one or more free-radical polymerization initiators at temperatures from 100 to 350 °C;
wherein the one or more free-radical polymerization initiators are introduced into the polymerization reactor by use of a phased flow pump, the phased flow pump being a reciprocating pump with at least two heads, each head comprising at least one cylinder.

2. The process of claim 1, **characterized in that** at least part of the process gas is pre-mixed with the one or more free-radical polymerization initiators prior to introduction into the polymerization reactor.

3. The process of any of the forgoing claims, **characterized in that** the polymerization reactor has one or more reaction zones, preferably at least two reaction zones, more preferably up to 6 reaction zones and in particular 3 to 4 reaction zones.

4. The process of claim 3, **characterized in that** when the polymerization reactor is an autoclave reactor, the reaction zones are defined by baffles attached to the stirrer.

5. The process of any of the forgoing claims, **characterized in that** the pump is operated in a manner of overlapping strokes of cylinders of different pump heads.

6. The process of claim 5, **characterized in that** the cylinders of the pump heads are operated such that one cylinder starts moving forward before the preceding cylinder has reached the end of its stroke.

7. The process of claim 5 or 6, **characterized in that** the cylinders operate in a suction stroke in which pressure inside the cylinder is reduced and/or initiator is sucked into the cylinder and in a discharge stroke, in which pressure inside the cylinder is increased and/or initiator is discharged out of the cylinder, wherein the suction stroke is shorter than the discharge stroke.

8. The process of claim 7, **characterized in that** the suction stroke of the cylinders of one pump head finishes before the discharge stroke of the cylinders of another pump head.

9. The process of any of the forgoing claims, further comprising discharging the reaction mixture comprising ethylene polymer and ethylene or ethylene copolymer, ethylene and one or more comonomers from the polymerization reactor.

10. The process of any of the forgoing claims, further comprising a step of cooling the discharged reaction mixture.

11. The process of any of the forgoing claims, further comprising transferring the discharged reaction mixture to at least one product separator for separating the ethylene polymer or ethylene copolymer.

12. The process of any of the forgoing claims, further comprising converting the obtained ethylene polymer or ethylene copolymer into pellets.

13. The process of any of the forgoing claims, **characterized in that** the one or more comonomers are selected from the group consisting of α,β-unsaturated C₃-C₈-carboxylic acids, derivatives of α,β - unsaturated C₃-C₈-carboxylic acids, such as unsaturated C₃-C₈-carboxylic esters and anhydrides, and 1-olefins, in particular vinyl carboxylates such as vinyl acetate, propene, 1-butene, 1-hexane, acrylic acid, n-butyl acrylate, ter-butyl acrylate, 2-ethylhexyl acrylate and vinyl propriate.

14. A high-pressure polymerization apparatus for carrying out the process of any of the forgoing claims, the apparatus comprising:
• a compressor or a series of compressors for compressing a reaction mixture comprising ethylene or ethylene and one or more comonomers to a pressure of 110 MPa to 500 MPa;
• a polymerization reactor for polymerizing ethylene or ethylene and one or more comonomers in the presence of one or more free-radical polymerization initiators at temperatures from 100 to 350 °C, the polymerization reactor being a continuously operated autoclave reactor with a stirrer driven by an electrical motor or a continuously operated tubular reactor;
• feedlines equipped for feeding the compressed process gas into the reactor; and
• a reciprocating phased flow pump with at least two heads, each head comprising at least one cylinder, for introducing the one or more free-radical polymerization initiators into the polymerization reactor.

15. The apparatus of claim 14, further comprising
• a cooler for cooling a reaction mixture discharged from the autoclave reactor;
• at least one separator for separating the ethylene polymer or ethylene copolymer; and
• a pelletizer converting the ethylene polymer or ethylene copolymer into pellets.
